# FASCICULE DE BREVET EUROPEEN

(11) **EP 2 087 492 B1**
(45) Date de publication et mention de la délivrance du brevet: **16.11.2011**
(21) Numéro de dépôt: 07866444.8
(22) Date de dépôt: 26.10.2007
(51) Int. Cl.: H01B 7/285

(54) **FAISCEAU DE CABLES SURMOULE AYANT UNE GRANDE SOUPLESSE ET PROCEDE DE FABRICATION D'UN FAISCEAU DE CE GENRE**
UMSPRITZTES HOCHBIEGSAMES KABELBÜNDEL UND VERFAHREN ZUR HERSTELLUNG EINES DERARTIGEN KABELBÜNDELS
OVERMOULDED CABLE BUNDLE HAVING A HIGH FLEXIBILITY AND METHOD FOR MAKING SUCH BUNDLE

(30) Priorité: 07.11.2006 FR 0609700
(43) Date de publication de la demande: 12.08.2009
(73) Titulaire: Leoni Wiring Systems France, 78180 Montigny le Bretonneux (FR)
(72) Inventeur: MACAIRE, Franck, 92160 Antony (FR); BOUDIER, Bruno, 78180 Montigny Le Bretonneux (FR)
(74) Mandataire: Eidelsberg, Olivier Nathan
(86) Numéro de dépôt international: PCT/FR2007/001771
(87) Numéro de publication internationale: WO 2008/056061

(56) Documents cités:
- EP-A1- 0 047 341
- EP-A2- 0 253 670
- GB-A- 1 426 180
- US-A- 4 231 986
- US-A- 4 722 589
- US-A1- 2004 140 119

## Description

La présente invention se rapporte à un faisceau de câbles ou fils comportant une pluralité de fils et un surmoulage ayant une forme géométrique, notamment pour faciliter la manipulation et le positionnement dans un véhicule et pour assurer la fonction d'étanchéité aux fluides et au bruit entre les fils, le surmoulage s'étendant le long d'un tronçon du faisceau.

On connaît dans l'art antérieur des faisceaux de câbles ou fils surmoulés de ce genre. Pour réaliser ce type de faisceau surmoulé, il est utilisé en particulier une technique suivant laquelle une partie (le tronçon) du faisceau est placée dans un moule avant une opération d'injection de la matière de surmoulage destinée à l'enrober le long du tronçon du faisceau. La fermeture du moule garantit une étanchéité au niveau du plan de joint mais n'assure pas l'étanchéité entre les fils. Pour assurer cette dernière, on connaît dans l'art antérieur le fait de placer de chaque côté du moule des serre-câbles qui compriment les fils les uns contre les autres pour limiter l'espace interfilaire et supprimer les risques d'apparition d'un canal sans matière entre plusieurs fils causés par un phénomène de triangularisation entre les fils qui supprimerait l'étanchéité de l'ensemble. Cependant ce procédé ne fonctionne pas convenablement et présente des inconvénients. Une fois la matière injectée entre les fils, celle-ci a tendance à sortir du moule par l'espace interfilaire au niveau du serre-fil. Bien que les serre-fils permettent de diminuer ces espaces, en particulier à la périphérie du toron, ils ne les suppriment pas totalement, à moins de serrer fort au point d'endommager les fils. En outre, les ouvertures du moule (au niveau des serres fils) par lesquelles le faisceau sort du moule étant à une dimension donnée, il est nécessaire de régler le serrage des faisceaux en fonction de leur diamètre pour s'adapter à la dimension de ces ouvertures. Ce réglage nécessaire fait que pour certains diamètres on ne peut pas serrer autant qu'on le souhaiterait (en particulier les gros faisceaux) et des espaces interfilaires restent. Il en résulte une "migration" de la matière injectée (souvent du polyuréthane PUR ou du caoutchouc au silicone liquide ou LSR) entre ces fils hors du moule. Cette migration peut s'étendre sur plusieurs centimètres, notamment entre 5 et 10 cm et se localise souvent surtout au coeur du toron ou faisceau. Il en résulte une rigidification de cette partie du toron, une difficulté à maîtriser la quantité de matière exacte à injecter et une gestion complexe des serre-câbles en fonction des options du véhicule équipé. En particulier, plus un véhicule a d'options, plus le faisceau a de câbles et est gros et plus il est difficile d'avoir un faisceau souple et dépourvu de matière de surmoulage ayant migré. Sachant que les véhicules automobiles ont de plus en plus d'options, ce qui complexifie la gestion de la diversité et qu'ils ont de plus en plus d'équipements, ce qui amène à grossir les torons et à réduire la place pour le cheminement des faisceaux, les constructeurs sont de plus en plus exigeants en termes de maîtrise des migrations, et demandent de plus en plus souvent des migrations nulles, afin d'obtenir un faisceau bien souple, que l'on peut disposer dans des positions les plus diverses possibles.

Aux documents US 2004/140119 et EP 0047341, il est décrit un faisceau suivant le préambule de la revendication 1.

La présente invention vise à surmonter les inconvénients de l'art antérieur en mettant à disposition un faisceau de câbles ou de fils surmoulé qui ne présente plus de migration entre les fils hors du moule, ou au moins une migration moindre, qui est moins rigide au niveau des interfaces avec le surmoulage, qui permet de connaître de manière plus exacte la quantité de matière à injecter pour former le surmoulage et qui permet une gestion des serre-câbles moins compliquée en fonction des options du véhicule équipé, et ce tout en pouvant prévoir des torons de plus en plus gros.

Suivant l'invention, un faisceau de fils surmoulé est tel que défini à la revendication 1, des perfectionnements étant définis aux sous revendications 2 à 5 et 8 à 9.

En prévoyant ainsi d'assurer l'étanchéité interfilaire au niveau des sections transversales d'extrémité du tronçon du faisceau de fils, on s'assure que cette matière va empêcher la matière de moulage liquide injectée autour des fils, matière qui va former le surmoulage, de s'échapper du moule. On s'assure ainsi de l'empêchement de la migration de la matière de moulage. Ainsi on connaît exactement la quantité de matière à injecter dans le moule pour former le surmoulage. En outre, cette matière de surmoulage reste bien localisée au niveau du surmoulage là où on souhaite le former. Elle ne s'étend pas à l'intérieur du faisceau entre les fils au-delà des sections d'extrémité du tronçon, et par conséquent ne rigidifient pas des parties supplémentaires du faisceau de fils. Le faisceau obtenu est ainsi bien souple. Enfin, le serrage des câbles n'a pas besoin d'être aussi fort que préalablement, de sorte que les serre-câbles sont moins compliqués à utiliser, notamment en ce qui concerne la maîtrise de la pression qu'ils exercent sur le faisceau de fils pour le rendre étanche à la matière injectée. Ainsi, les serre-câbles endommagent ils moins le faisceau de fils que dans l'art antérieur.

Suivant un mode de réalisation préféré de l'invention et un perfectionnement de celle-ci, le faisceau de fils est enrubanné au moins au niveau d'une section d'extrémité, de préférence au niveau des deux sections d'extrémité, par un ruban, notamment un ruban adhésif.

Ainsi, ce ruban, qui est disposé dans le produit final entre le surmoulage et les fils extérieurs du faisceau, va-t-il assurer une sorte de serrage préalable des faisceaux dans lesquels on a inséré au niveau des sections d'extrémité du tronçon à surmouler de la matière malléable et souple dans le temps, tel que du mastic, pour assurer une bonne étanchéité au niveau des sorties du moule lors de l'injection de la matière dans le moule.

Suivant un mode de réalisation préféré de l'invention, le diamètre du faisceau de fils est compris entre 18 et 45 mm, diamètres qui correspondent aux exigences actuelles des constructeurs automobiles, en fonction des options. En effet, avec ce nouveau système on peut maintenant prévoir des diamètres de toron plus grands que dans l'art antérieur tout en obtenant des faisceaux de fils qui sont toujours aussi souples.

De préférence les fils ou câbles sont agencés parallèlement les uns aux autres suivant une direction longitudinale.

Suivant un mode de réalisation préféré, les fils ou câbles comportent au moins un fil d'un premier diamètre de section transversale et au moins un fil d'un deuxième diamètre de section transversale, différent du premier diamètre.

Dans ce cas, avec le système et procédé de l'invention, on parvient à lutter efficacement contre la migration malgré de grandes différences de sections propices à la formation de grands espaces intercalaires.

La présente invention se rapporte également à un procédé pour fabriquer un faisceau de fils surmoulé suivant l'invention.

Suivant l'invention, le procédé est tel que défini à la revendication 6. Des perfectionnements étant définis aux sous revendications 7, 8 et 9.

Une fois la matière durcie (ou polymérisée), on ouvre le moule et on récupère le faisceau de fils avec le surmoulage qui a été formé autour dudit tronçon du faisceau de fils. Grâce à la présence de la matière qui reste malléable et souple au cours du temps, il n'y a pas eu de "fuite" de la matière que l'on a injecté dans le moule par les espaces entre les fils et celle-ci ne s'est donc pas insérée entre les fils le long du faisceau de fils à l'extérieur du surmoulage. Par conséquent, le faisceau de fils à l'extérieur du surmoulage est toujours aussi souple et facile à utiliser. En outre, le serrage des fils au niveau des sorties du moule lors de l'injection est moins important pour un résultat aussi bon que dans l'art antérieur, de sorte qu'un diamètre plus important des faisceaux de fils peut être utilisé.

Suivant un mode de réalisation préféré de l'invention, avant la fermeture du moule et après la mise en place de la matière qui reste malléable et souple au cours du temps, on enrubanne les parties du faisceau de fils qui se trouvent au niveau des sorties du moule, notamment au niveau des serre-câbles, notamment avec du ruban adhésif.

Suivant l'invention, on entend par « qui reste malléable et souple au cours du temps », notamment une matière qui est malléable et souple à des conditions de température et pression normales et qui le reste après avoir subi une variation de température et de pression correspondant à un passage d'une matière de surmoulage de l'état liquide à l'état solide et inversement et notamment qui le reste dans un domaine de température allant de -40°C à 125°C.

On va maintenant décrire un mode de réalisation préféré de l'invention en se reportant aux dessins, dans lesquels il est représenté :
à la figure 1, un faisceau de câbles surmoulé suivant l'invention ;
à la figure 2, une vue en coupe suivant la ligne A-A du faisceau de câbles au niveau d'une section d'extrémité du tronçon de faisceau de câble autour duquel est formé le surmoulage ;
à la figure 3, une vue en perspective d'une installation pour mouler un surmoulage autour d'un faisceau suivant l'invention à l'état avant l'opération d'injection;
à la figure 4, une vue en perspective de l'installation de la figure 3 pendant l'injection de la matière pour former le surmoulage et
à la figure 5, une vue en perspective de l'installation une fois le moule réouvert et le produit final obtenu.

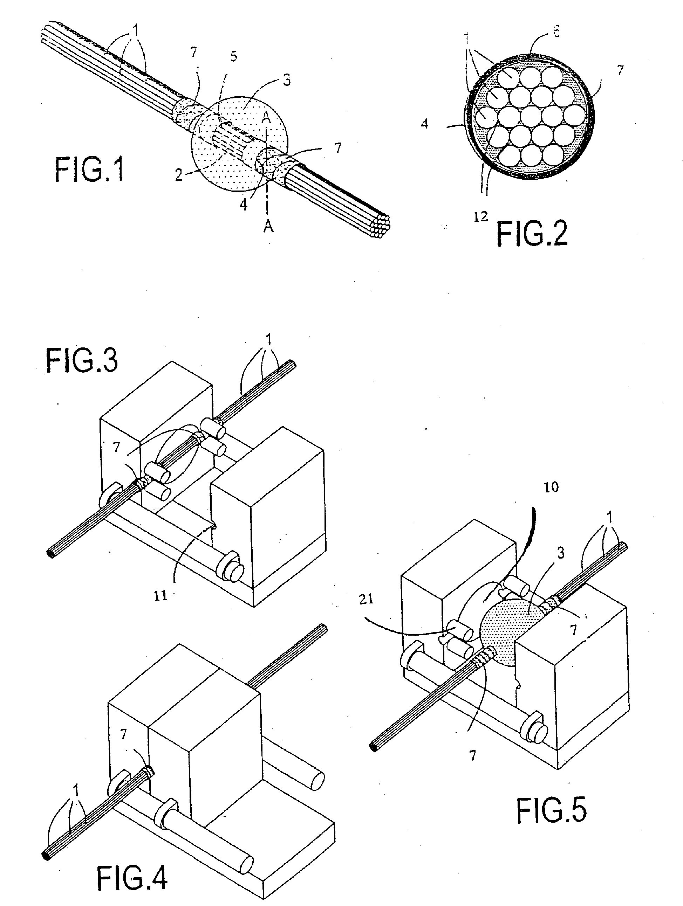

A la figure 1, on peut voir un faisceau de fils suivant l'invention. Il est constitué d'une pluralité de fils 1 agencés en un faisceau de fils s'étendant sensiblement longitudinalement les uns parallèlement aux autres, et qui ont ici tous le même diamètre de section transversale. On peut cependant suivant l'invention avoir des diamètres qui différent les uns des autres, et ce dans des proportions élevées, par exemple d'un facteur 2 ou 3. Un tronçon 2 de ce faisceau de fils est entouré par un surmoulage 3 en une matière thermoplastique moulée par injection, telle qu'un polyuréthane ou un silicone en caoutchouc. Le tronçon 2 s'étend entre deux sections 4 et 5 d'extrémité correspondant aux interfaces extérieures du surmoulage avec le faisceau de câbles. A la figure 2, il est représenté une vue en coupe suivant la ligne A-A de la figure 1, qui représente la section 4. Au niveau de cette section 4 et de part et d'autre de celle-ci sur une distance de petite dimension, notamment de dimension plus petite que l'extension longitudinale du surmoulage, par exemple sur une distance de quelques centimètres, il est disposé un ruban 7 enrubanné sur les fils du faisceau de câbles, notamment avec une légère pression. Cet enrubannage peut être fait à l'aide d'un ruban classique adhésif. Les fils sont ainsi maintenus serrés les uns contre les autres par cet enrubannage. Entre les fils on a introduit une matière 6 malléable et souple telle qu'un mastic, de la graisse notamment adhérente, un gel ou un élastomère souple. L'important est que cette matière ne se modifie pas au cours du temps en ce qui concerne sa souplesse et sa malléabilité et notamment ne varie pas en fonction de la température dans un domaine de température allant de la température ambiante pouvant être supportée par un véhicule automobile jusqu'à une température correspondant à la température à laquelle la matière thermoplastique qui a été injectée pour former le surmoulage est liquide, par exemple à une température comprise entre -40°C et +125°C. Un exemple d'une telle matière est le buthyl.

Pour obtenir le faisceau de fils à surmoulage des figures 1 et 2, on a utilisé une installation et un procédé comme représenté aux figures 3 à 5. On a d'abord pris un faisceau de fils en disposant les fils 1 les uns contre les autres en un faisceau, puis on a introduit au niveau des sections d'extrémité 4, 5 du tronçon 3, autour duquel on souhaite former un surmoulage, de la matière 6 dite malléable et souple dans les espaces entre les fils, puis on a enrubanné ces parties d'extrémité 4, 5 avant de placer le faisceau dans un moule 10 ayant deux sorties 11 par lesquelles peuvent passer le faisceau de fils de part et d'autre. Les parties d'extrémité enrubannées sont reçues entre deux serre-câbles 21, puis le moule 10 est refermé avant injection de la matière thermoplastique qui va former le surmoulage. Une fois l'injection terminée, on laisse refroidir la matière thermoplastique pour qu'elle se durcisse ou polymérise et on réouvre le moule pour obtenir en sortie le faisceau de câbles à surmoulage représenté à la figure 1. Lors de l'injection de la matière de moulage, on a pu prévoir à l'avance exactement la quantité de matière à injecter, aucune migration n'ayant eu lieu au niveau des sorties 11 de moule en passant par les interstices entre les fils, ceux-ci étant protégés par la matière d'étanchéité malléable et souple.

La présente invention est particulièrement bien adaptée aux cas où les sections des fils ont des diamètres différents, comme c'est le cas aujourd'hui le plus souvent, les faisceaux mélangeant des fils d'alimentation en puissance, des câbles de données, etc.

Le surmoulage a été représenté en forme de sphère. Il peut bien évidemment avoir n'importe quelle forme du moment que celle-ci peut être obtenue par moulage dans un moule de forme correspondante.

Le surmoulage ne s'étend, dans la direction longitudinale du faisceau de fils, que sur une partie de la longueur du faisceau. La longueur du faisceau est supérieure à celle du surmoulage.

## Revendications

1. Faisceau de fils (1) surmoulé, comportant une pluralité de fils (1) définissant entre eux des espaces interfilaires (12) et un surmoulage (3) ayant une forme, le surmoulage étant en une matière de moulage, notamment par injection dans un moule dans lequel a été préalablement disposé le tronçon de faisceau de fils autour duquel on souhaite former le surmoulage en question, le surmoulage s'étendant entre deux sections transversales (4, 5) d'extrémité, **caractérisé en ce que** le surmoulage entoure un tronçon (12) du faisceau qui s'étend seulement sur une longueur, ladite longueur du tronçon étant inférieure à celle du faisceau, et au moins au niveau d'au moins une des deux sections transversales d'extrémité du tronçon, de préférence au niveau des deux sections (4, 5), il est disposé dans les espaces (12) interfilaires un matériau d'étanchéité (6) qui reste malléable et souple au cours du temps, tel qu'un mastic, un gel, un élastomère souple ou une graisse, notamment adhérente.

2. Faisceau suivant la revendication 1, **caractérisé en ce que** le faisceau de fils (1) est enrubanné au moins au niveau d'une section d'extrémité, de préférence au niveau des deux sections d'extrémité, par un ruban (7), notamment un ruban adhésif.

3. Faisceau suivant la revendication 1 ou 2, **caractérisé en ce que** le diamètre du faisceau de fils est compris entre 18 et 45 mm.

4. Faisceau suivant la revendication 1, 2 ou 3, **caractérisé en ce que** les fils sont parallèles entre eux suivant une direction longitudinale.

5. Faisceau suivant l'une des revendications 1 à 4, **caractérisé en ce que** les fils ou câbles comporte au moins un fil d'un premier diamètre de section transversale et au moins un fil d'un deuxième diamètre de section transversale, différent du premier diamètre.

6. Procédé pour fabriquer un faisceau de fils surmoulé **caractérisé en ce qu'**il comporte les étapes qui consistent à former un faisceau de fils constitué d'une pluralité de fils définissant entre eux des espaces interfilaires, à prendre un moule ayant la forme du surmoulage que l'on souhaite former autour d'un tronçon du faisceau de fils de moindre longueur que le faisceau de fils, à insérer au niveau des sections transversales d'extrémité du tronçon de fils destiné à être disposé dans le moule, entre les fils, de la matière qui reste malléable et souple au cours du temps, telle qu'un mastic, un gel, un élastomère souple ou une graisse, notamment adhérente, notamment au niveau de la sortie des moules permettant le passage du faisceau de fils, à disposer le tronçon du faisceau de fils autour duquel on souhaite former le surmoulage dans le moule, et à fermer le moule en serrant avec les ouvertures du moule le faisceau de fils au niveau des sections d'extrémité où a été disposée de la matière malléable et souple, puis à injecter dans le moule la matière pour former le surmoulage, notamment de la matière thermoplastique telle que du PUR (polyuréthane) ou un élastomère à base de silicone liquide.

7. Procédé suivant la revendication 6, **caractérisé en ce que** avant la fermeture du moule et après la mise en place de la matière qui reste malléable et souple au cours du temps, on enrubanne les parties du faisceau de fils qui se trouvent au niveau des sorties du moule, notamment au niveau des serre-câbles, notamment avec du ruban adhésif.

8. Faisceau suivant l'une des revendications 1 à 5, **caractérisé en ce que** l'on entend par qui reste malléable et souple au cours du temps, notamment une matière qui, est malléable et souple à des conditions de température et pression normales et qui le reste après avoir subi une variation de température et de pression correspondant à un passage d'une matière de surmoulage de l'état liquide à l'état solide et inversement.

9. Faisceau suivant l'une des revendications 1 à 5, **caractérisé en ce que** la matière ne se modifie pas dans une gamme de températures allant de -40°C à +125°C.

10. Procédé suivant la revendication 6 ou 7, **caractérisé en ce que** l'on entend par qui reste malléable et souple au cours du temps, notamment une matière qui, est malléable et souple à des conditions de température et pression normales et qui le reste après avoir subi une variation de température et de pression correspondant à un passage d'une matière de surmoulage de l'état liquide à l'état solide et inversement.

## Claims

1. Overmoulded cable bundle (1) comprising a plurality of cables (1) which define between them inter-cable spaces (12) and an overmoulding (3) with a form, the overmoulding being made from a moulding material, in particular by injection into a mould into which previously the section of the bundle of cables has been arranged around which the overmoulding in question is to be formed, the overmoulding extending between two traverse end sections (4, 5), **characterised in that** the overmoulding surrounds a section (12) of the bundle, which extends only over a length, said length of the section being smaller than that of the bundle, and at least at one of the two traverse end sections of the section, preferably at both sections (4, 5), a sealing material (6) is arranged in the inter-cable spaces (12), which remains malleable and supple over time, such as a putty, a gel, a flexible elastomer or grease, in particular an adherent one.

2. Bundle according to claim 1, **characterised in that** the bundle of cables (1) is wrapped, at least at one end section, preferably at both end sections, by a tape (7), in particular an adhesive tape.

3. Bundle according to claim 1 or 2, **characterised in that** the diameter of the bundle of cables is between 18 and 45 mm.

4. Bundle according to claim 1, 2 or 3, **characterised in that** the cables are parallel to one another in longitudinal direction.

5. Bundle according to one of claims 1 to 4, **characterised in that** the wires or cables comprise at least one wire with a first diameter of a transverse section and at least one wire with a second diameter of a transverse section which is different from the first diameter.

6. Method for producing a overmoulded bundle of cables, **characterised in that** it comprises steps which consist of forming a bundle of cables comprising a plurality of cables, which define between them inter-cable spaces, taking a mould with the form of the overmoulding desired for shaping around a section of the bundle of cables of smaller length than the bundle of cables, inserting in the transverse end sections of the section of cables intended to be arranged in the mould, between the cables, a material which remains malleable and supple over time, such as a putty, a gel, a supple elastomer or grease, in particular an adherent one, in particular at the outlet of the moulds allowing the passage of the bundle of cables, arranging the section of the bundle of cables around which the overmoulding is intended to be formed in the mould and closing the mould by clamping with the openings of the mould the bundle of cables at the end sections where the malleable and supple material has been arranged, then injecting into the mould the material for forming the overmoulding, in particular thermoplastic material such as PUR (polyurethane) or an elastomer with a liquid silicone base.

7. Method according to claim 6, **characterised in that** prior to the closure of the mould and after placing the material which remains malleable and supple over time, the parts of the bundle of cables which are located at the outlets of the mould, in particular the cable fasteners, are wrapped in tape, in particular with adhesive tape.

8. Bundle according to any one of claims 1 to 5, **characterised in that** the material which remains malleable and supple over time is understood in particular to be a material which is malleable and supple in normal temperature and pressure conditions and remains so after being subjected to a variation of temperature and pressure corresponding to the transition of an overmoulding material in a liquid state into a solid state and vice versa.

9. Bundle according to any one of claims 1 to 5, **characterised in that** the material is not modified in a temperature range of -40 °C to +125 °C.

10. Method according to claim 6 or 7, **characterised in that** the material which remains malleable and supple over time is understood in particular to be a material which is malleable and supple in normal temperature and pressure conditions and remains so after being subjected to a variation of temperature and pressure corresponding to the transition of an overmoulding material in a liquid state into a solid state and vice versa.

## Patentansprüche

1. Umspritztes Leitungsbündel (1), aufweisend eine Vielzahl von Leitungen (1), die zwischen sich Leitungszwischenräume (12) definieren, und ein Gussstück (3), das eine Form aufweist, wobei das Gussstück aus einer Formmasse besteht, insbesondere zum Spritzgießen in eine Gussform, in der zuvor das Leitungsbündel-Teilstück angeordnet wurde, um das herum das erwähnte Gussstück geformt werden soll, wobei sich das Gussstück zwischen zwei Quer-Endabschnitten (4, 5) erstreckt, **dadurch gekennzeichnet, dass** das Gussstück ein Teilstück (12) des Bündels umgibt, das sich nur über eine Länge erstreckt, wobei die Länge des Teilstücks kürzer ist als die des Bündels, und wenigstens im Bereich von mindestens einem der Quer-Endabschnitte des Teilstücks, vorzugsweise im Bereich der beiden Abschnitte (4, 5), ein Dichtungsmaterial (6) in den Leitungszwischenräumen (12) angeordnet ist, das im Laufe der Zeit verformbar und flexibel bleibt, beispielsweise ein Kitt, ein Gel, ein flexibles Elastomer oder ein Fett, insbesondere ein haftendes Fett.

2. Bündel nach Anspruch 1, **dadurch gekennzeichnet, dass** das Leitungsbündel (1) wenigstens im Bereich eines Endabschnitts, vorzugsweise im Bereich der beiden Endabschnitte, mit einem Band (7), insbesondere einem Klebeband, umwickelt ist.

3. Bündel nach Anspruch 1 oder 2, **dadurch gekennzeichnet, dass** der Durchmesser des Leitungsbündels zwischen 18 und 45 mm beträgt.

4. Bündel nach Anspruch 1, 2 oder 3, **dadurch gekennzeichnet, dass** die Leitungen in Längsrichtung parallel zueinander verlaufen.

5. Bündel nach einem der Ansprüche 1 bis 4, **dadurch gekennzeichnet, dass** die Leitungen oder Kabel mindestens eine Leitung mit einem ersten Querschnittsdurchmesser und mindestens eine Leitung mit einem zweiten Querschnittsdurchmesser, der sich vom ersten Durchmesser unterscheidet, aufweisen.

6. Verfahren zur Herstellung eines umgossenen Leitungsbündels, **dadurch gekennzeichnet, dass** es folgende Schritte umfasst: Bilden eines Leitungsbündels, das aus einer Vielzahl von Leitungen besteht, die zwischen sich Leitungszwischenräume definieren, Verwenden einer Gussform, die die Form des Gussstücks aufweist, das um ein Leitungsbündel-Teilstück mit einer kürzeren Länge als das Leitungsbündel herum geformt werden soll, Einbringen eines Materials, das im Laufe der Zeit verformbar und flexibel bleibt, beispielsweise ein Kitt, ein Gel, ein flexibles Elastomer oder ein Fett, insbesondere ein haftendes Fett, zwischen die Leitungen im Bereich der Quer-Endabschnitte des Leitungsteilstücks, das in der Gussform angeordnet werden soll, insbesondere im Bereich der Austrittsöffnung der Gussformen, durch die das Leitungsbündel geführt werden kann, Anordnen des Leitungsbündel-Teilstücks, um das herum das Gussstück geformt werden soll, in der Gussform, und Schließen der Gussform unter Zusammenpressen des Leitungsbündels im Bereich der Endabschnitte, wo das verformbare und flexible Material platziert wurde, mit den Öffnungen der Form, anschließend Einspritzen der Masse, insbesondere eines Thermoplasts wie PUR (Polyurethan) oder eines Elastomers auf der Basis eines flüssigen Silikons, in die Gussform, um das Gussstück zu formen.

7. Verfahren nach Anspruch 6, **dadurch gekennzeichnet, dass** vor dem Schließen der Gussform und nach dem Platzieren des Materials, das im Laufe der Zeit verformbar und flexibel bleibt, die Teile des Leitungsbündels umwickelt werden, die sich im Bereich der Austrittsöffnungen der Gussform, insbesondere im Bereich der Kabelklemmen befinden, insbesondere mit Klebeband.

8. Bündel nach einem der Ansprüche 1 bis 5, **dadurch gekennzeichnet, dass** unter "das im Laufe der Zeit verformbar und flexibel bleibt" insbesondere ein Material zu verstehen ist, das unter normalen Temperatur- und Druckbedingungen verformbar und flexibel ist und dies bleibt, nachdem es eine Temperatur- und Druckänderung erfahren hat, die dem Übergang eines Gießmaterials vom flüssigen Zustand in den festen Zustand und umgekehrt entspricht.

9. Bündel nach einem der Ansprüche 1 bis 5, **dadurch gekennzeichnet, dass** sich das Material in einem Temperaturbereich von -40 °C bis +125 °C nicht verändert.

10. Verfahren nach Anspruch 6 oder 7, **dadurch gekennzeichnet, dass** unter "das im Laufe der Zeit verformbar und flexibel bleibt" insbesondere ein Material zu verstehen ist, das unter normalen Temperatur- und Druckbedingungen verformbar und flexibel ist und dies bleibt, nachdem es eine Temperatur- und Druckänderung erfahren hat, die dem Übergang eines Gießmaterials vom flüssigen Zustand in den festen Zustand und umgekehrt entspricht.
